# EUROPEAN PATENT APPLICATION

(11) **EP 3 564 890 A1**
(43) Date of publication of application: **06.11.2019**
(21) Application number: 18177666.7
(22) Date of filing: 14.06.2018
(51) Int. Cl.: G06Q 30/02

(54) **A DISPLAY CABINET FOR DISPLAY OF ITEMS**

(30) Priority: 02.05.2018 IN 201811016605
(71) Applicant: Frigoglass India Pvt Ltd, 110016 New Delhi (IN)
(72) Inventor: AGARWAL, Rahul, 122050 Gurgaon (IN); RANA, Manoj Singh, 122050 Gurgaon (IN); KUMAR, Mahesh, 122050 Gurgaon (IN)
(74) Representative: Beck & Rössig European Patent Attorneys

(57) **Abstract**

A display cabinet (100) for display of items, comprises an enclosed space adapted to house the items, one or more light sources (112) provided within the enclosed space, a periphery (102) encapsulating the enclosed space, wherein the periphery (102) includes a transparent portion (104), a sticker (106) attached on an outer surface of the transparent portion (104), the sticker (106) including an ornamentation (108) and a pattern of holes (107) provided within the ornamentation (108) an electrical power source configured to deliver electrical power to the one or more light sources (112) and a control unit (110) configured to regulate the electrical power being delivered to the one or more light sources (112).

## Description

### TECHNICAL FIELD

The present invention generally relates to merchandising technologies pertaining to enhance shopping experience and more particularly to a display cabinet for display of items.

### BACKGROUND ART

In present era, it is not about what products/items a vending machine makes available to customers. Rather, it is important how the products/items are merchandised so that it creates desire among customers to purchase the products/items and subsequently enhance the sale of merchandise. The brand is particularly important in the product marketing, where buying decisions are often made at the point of sale. Therefore, it is important to create the most possible striking visualization.

Visual marketing is everyday business activity, advertisement culture, company's intangible assets that conveys a corporate image. Hence, it has been widely used on the merchandise display. Conventional approaches for visual marketing include use of distinct areas for display of products and for related promotional content (such as branding, logo, advertisement, special offers and salient features etc.). Moreover, as per the present trends the promotional content is increasingly displayed in moving images forms such as videos and animations including special effects. However, such an approach demands separate areas for display of the products and the promotional content in a showroom for example, causing a lot of real estate to be consumed. Additionally, it demands cost intensive hardware such as LCD/LED screens, streaming networks and consumption of large amounts of electricity. All of the above, when two aspects of merchandizing are competing with each other for attention of a potential customer.

In light of the discussion above, there is need for a display cabinet for display of items, which alleviates one or more of the above mentioned deficiencies.

### OBJECT OF THE INVENTION

Some of the objects of the present disclosure aimed to ameliorate one or more problems of the prior art or to at least provide a useful alternative are listed herein below.

An object of the present disclosure is to provide a display cabinet for display of items.

### SUMMARY OF THE INVENTION

Embodiments of the present invention aim to provide a display cabinet for display of items. The present invention offers a cost effective solution of merchandizing by minimizing capital and operational expenditure. Also, the present invention also minimizes space requirements as the products and the promotional content in form of ornamentation can be displayed in a common area of a shop or a showroom. Additionally, the present invention ensures that the products and the promotional content or the ornamentation are not competing with each other for a potential customer's attention.

According to a first aspect of the present invention, there is provided a display cabinet for display of items, the display cabinet comprises an enclosed space adapted to house the items, one or more light sources provided within the enclosed space, a periphery encapsulating the enclosed space. The periphery includes a transparent portion. Additionally, the display cabinet comprises a sticker attached on an outer surface of the transparent portion, the sticker including an ornamentation and a pattern of holes provided within the ornamentation, an electrical power source configured to deliver electrical power to the one or more light sources and a control unit configured to regulate the electrical power being delivered to the one or more light sources.

In accordance with an embodiment of the present invention, the display cabinet is a part of a refrigerator.

In accordance with an embodiment of the present invention, the one or more light sources include Light Emitting Diodes (LEDs).

In accordance with an embodiment of the present invention, the transparent portion is made of any one of glass and a transparent polymer material.

In accordance with an embodiment of the present invention, respective diameters of the holes in the pattern of holes are in a range of 0.5 mm to 3.5 mm and minimum peripheral distance between any two holes is in a range of 0 to 3.5 mm in all directions.

In accordance with an embodiment of the present invention, the electrical power source is any one or more of an AC and/or DC power source.

In accordance with an embodiment of the present invention, the control unit is further configured to regulate the electrical power by regulating a voltage of the electrical power.

In accordance with an embodiment of the present invention, the control unit is further configured to regulate the electrical power in order to generate a plurality of levels of illuminations from the one or more light sources.

In accordance with an embodiment of the present invention, a plurality of respective time durations of the plurality of levels of illumination have a plurality of predetermined respective values.

### BRIEF DESCRIPTION OF THE ACCOMPANYING DRAWINGS

So that the manner in which the above recited features of the present invention can be understood in detail, a more particular description of the invention, briefly summarized above, may have been referred by embodiments, some of which are illustrated in the appended drawings. It is to be noted, however, that the appended drawings illustrate only typical embodiments of this invention and are therefore not to be considered limiting of its scope, for the invention may admit to other equally effective embodiments.

These and other features, benefits, and advantages of the present invention will become apparent by reference to the following text figure, with like reference numbers referring to like structures across the views, wherein:
Fig. 1A illustrates a product display cabinet applied to a refrigerator, in accordance with an embodiment of the present invention;
Fig. 1B illustrates a pattern of holes on a sticker in accordance with an embodiment of the present invention;
Fig. 1C illustrates one or more light sources of the product display cabinet, in accordance with an embodiment of the present invention;
Fig. 1D illustrates a control unit in accordance with an embodiment of the present invention;
Fig. 1E illustrates the product display cabinet with an intermediate illumination of one or more light sources, in accordance with an embodiment of the present invention;
Fig. IF illustrates the product display cabinet with maximum illumination of the one or more light sources, in accordance with an embodiment of the present invention;
Fig. 2A, 2B and 2C illustrates the product display cabinet applied to a cosmetic products showroom, in accordance with an embodiment of the present invention; and
Fig. 3A, 3B and 3C illustrates the product display cabinet applied to a food stall, in accordance with an embodiment of the present invention.

### DETAILED DESCRIPTION OF THE PREFERRED EMBODIMENTS

While the present invention is described herein by way of example using embodiments and illustrative drawings, those skilled in the art will recognize that the invention is not limited to the embodiments of drawing or drawings described, and are not intended to represent the scale of the various components. Further, some components that may form a part of the invention may not be illustrated in certain figures, for ease of illustration, and such omissions do not limit the embodiments outlined in any way. It should be understood that the drawings and detailed description thereto are not intended to limit the invention to the particular form disclosed, but on the contrary, the invention is to cover all modifications, equivalents, and alternatives falling within the scope of the present invention as defined by the appended claim. As used throughout this description, the word "may" is used in a permissive sense (i.e. meaning having the potential to), rather than the mandatory sense, (i.e. meaning must). Further, the words "a" or "an" mean "at least one" and the word "plurality" means "one or more" unless otherwise mentioned. Furthermore, the terminology and phraseology used herein is solely used for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited, and is not intended to exclude other additives, components, integers or steps. Likewise, the term "comprising" is considered synonymous with the terms "including" or "containing" for applicable legal purposes. Any discussion of documents, acts, materials, devices, articles and the like is included in the specification solely for the purpose of providing a context for the present invention. It is not suggested or represented that any or all of these matters form part of the prior art base or were common general knowledge in the field relevant to the present invention.

In this disclosure, whenever a composition or an element or a group of elements is preceded with the transitional phrase "comprising", it is understood that we also contemplate the same composition, element or group of elements with transitional phrases "consisting of', "consisting", "selected from the group of consisting of, "including", or "is" preceding the recitation of the composition, element or group of elements and vice versa.

The present invention is described hereinafter by various embodiments with reference to the accompanying drawing, wherein reference numerals used in the accompanying drawing correspond to the like elements throughout the description. This invention may, however, be embodied in many different forms and should not be construed as limited to the embodiment set forth herein. Rather, the embodiment is provided so that this disclosure will be thorough and complete and will fully convey the scope of the invention to those skilled in the art. In the following detailed description, numeric values and ranges are provided for various aspects of the implementations described. These values and ranges are to be treated as examples only, and are not intended to limit the scope of the claims. In addition, a number of materials are identified as suitable for various facets of the implementations. These materials are to be treated as exemplary, and are not intended to limit the scope of the invention.

Embodiments of the present invention aim to provide a display cabinet for display of items. In that manner, at least a portion of a periphery encapsulating an enclosed space of the cabinet is kept transparent and a sticker with ornamentation is placed onto the transparent portion. The sticker is provided with a pattern of holes, such that holes are made through the ornamentation. While one or more light sources have been provided within the enclosed space. Controlling the illumination of the one or more light sources allows control of visibility of the ornamentation and products inside the product display cabinet. In that manner, at different levels of illumination, the products and the ornamentation are visible to varying extents, i.e. ornamentation is entirely visible with negligible visibility of the products at no illumination, while the products are substantially visible with negligible visibility of the ornamentation at maximum illumination. Further, duration of the different levels of illumination may also be customized.

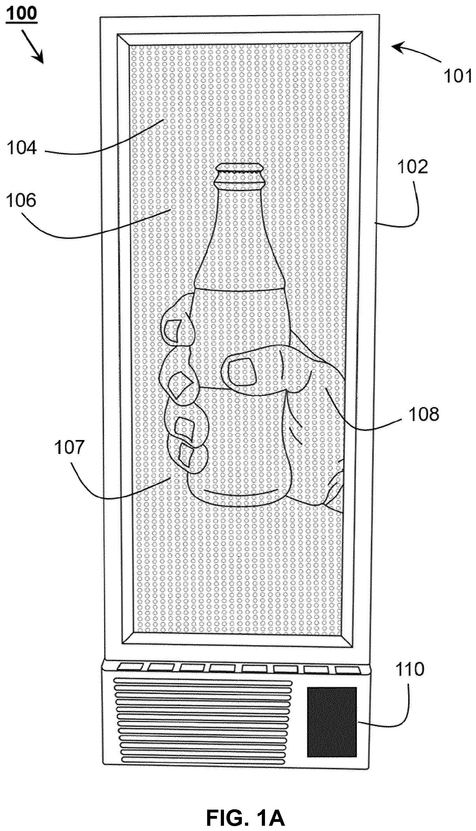

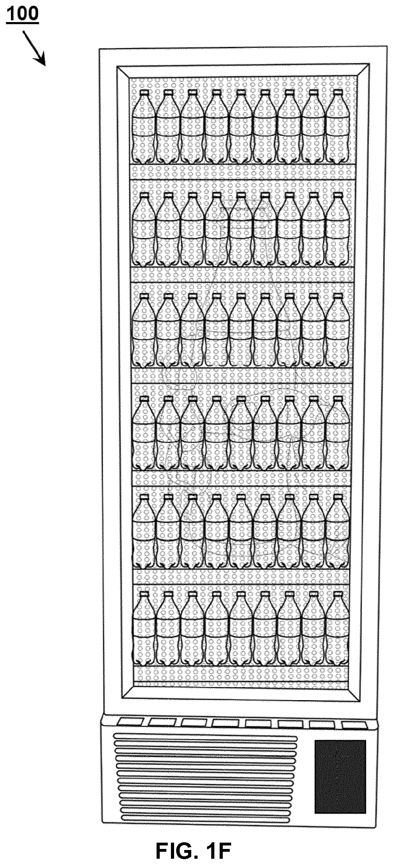

Referring to the drawings, the invention will now be described in more detail. Figure 1A illustrates a product display cabinet 100 (hereinafter referred to as "cabinet 100") applied to a refrigerator 101, in accordance with an embodiment of the present invention. The cabinet 100 includes an enclosed space adapted to house the items. In that manner, the enclosed space can have shelves, handles and hooks etc. to place the products. The selection of shelves, handles and hooks etc. may depend on type of the products, such as for bottles, the enclosed space may have shelves, while for garments and clothing, the enclosed space may have hooks. A periphery 102 encapsulates the enclosed space. The periphery 102 in that manner defines wall(s) of the cabinet 100 or the refrigerator 101. While in this case the periphery 102 is of rectangular cross-section (or cuboidal in shape), in other scenarios the periphery 102 may be cylindrical or may have any random polygonal cross-section.

It is envisaged here, that the periphery 102 includes a transparent portion 104. The transparent portion 104 may be a door or a window provided along the periphery 102. In several embodiments, more than one transparent portions 104 may also be provided without departing from the scope of the invention. Further, the transparent portion 104 may be made up of glass or a transparent polymer material such as Polypropylene or Poly-Vinyl-Chloride (PVC) etc. A sticker 106 is attached on an outer surface of the transparent portion 104. The sticker 106 includes an ornamentation 108. In the given scenario, the ornamentation 108 is an image of a person's hand holding a bottle, while in several alternate embodiments, the ornamentation may include colour, branding, logo, advertisements, product information, special offers and information in text form. In addition to the ornamentation 108, the sticker 106 also includes a pattern of holes 107 provided within the ornamentation 108. In other words, the holes of the pattern of holes 107 are made through the ornamentation 108.

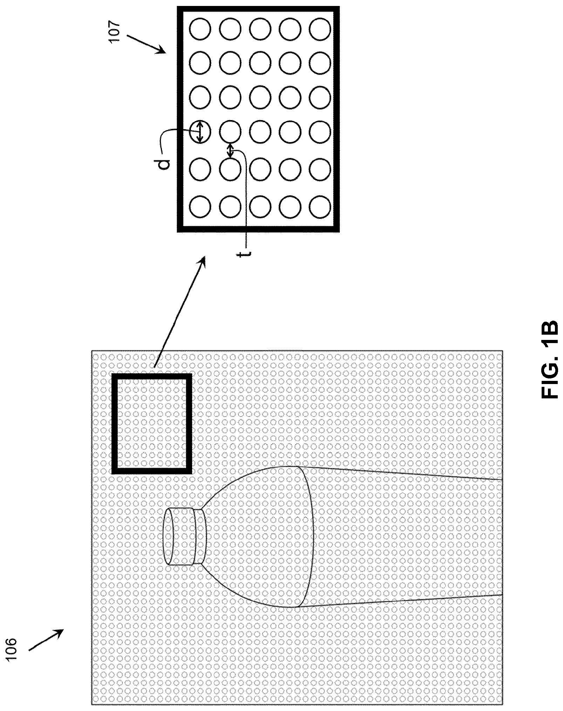

Figure 1B illustrates the pattern of holes 107 on the sticker 106, in accordance with an embodiment of the present invention. The letter 'd' represents a diameter of a hole, while 't' represents minimum peripheral distance between any two holes. It is contemplated that respective diameters of the holes in the pattern of holes 107 are in a range of 0.5 mm to 3.5 mm and minimum peripheral distance between any two holes is in a range of 0 to 3.5 mm in all directions.

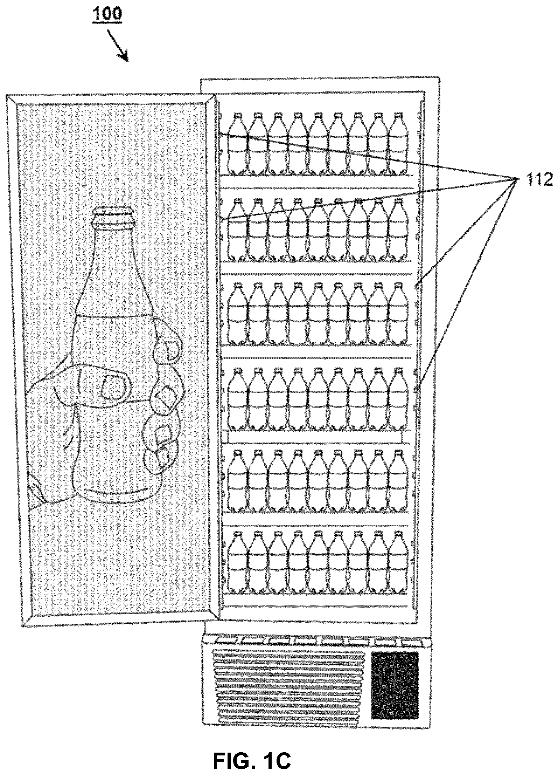

Figure 1C illustrates one or more light sources 112 of the product display cabinet 100, in accordance with an embodiment of the present invention. The one or more light sources 112 have been provided within the enclosed space. In that manner, the one or more light sources 112 may be attached to any one or more internal walls of the cabinet 100 or may be attached on an inner surface of the transparent portion 104 itself. In one embodiment of the invention, the one or more light sources 112 include Light Emitting Diodes (LEDs). Although in several alternate embodiments, the one or more light sources 112 may include incandescent bulbs, CFL lamps and halogen lamps (for fairly large cabinets) etc. The one or more light sources 112 are positioned within the enclosed space in such a way that the one or more light sources 112 may illuminate the items placed inside the enclosed space.

An electrical power source is configured to deliver electrical power to the one or more light sources 112. The electrical power source may be any one or more of an AC and/or DC power source such as a battery. The battery may further be a rechargeable battery, such as Lithium ion or Nickel-Metal-Hydride battery. In several embodiments, the cabinet 100 may be capable of running from any one or both of D.C. power as well as A.C. power. In that manner, additional equipment may be used, for example, for the cabinet 100 capable of running of the A.C. power source, an inbuilt or an externally provided inverter may be used while supplying power from the battery. Or, in case the cabinet 100 is designed to run on the D.C. power, an AC/DC converter in line with the A.C. power supply may be used. Further, a control unit 110 is configured to regulate the electrical power being delivered to the one or more light sources 112.

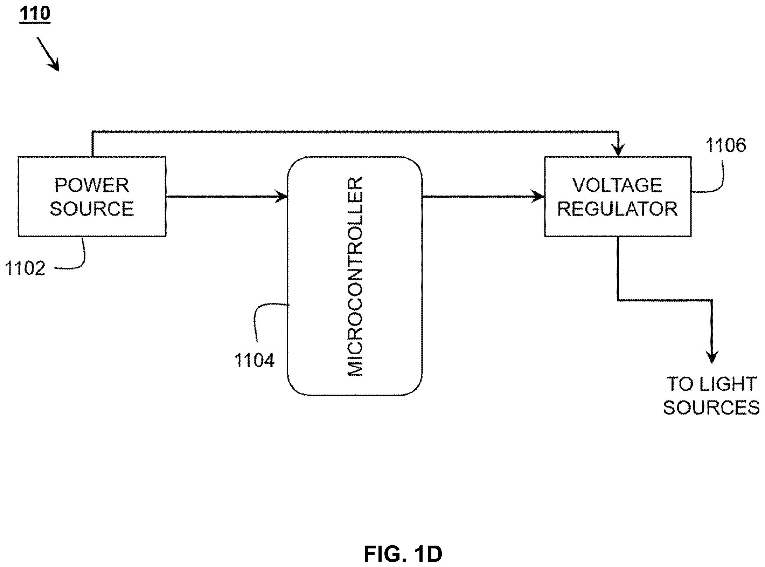

Figure 1D illustrates the control unit 110 in accordance with an embodiment of the present invention. The control unit 110 is configured to regulate the electrical power by regulating a voltage of the electrical power. The control unit 110 includes a constant voltage power source 1102 connected with a microcontroller 1104 and a voltage regulator 1106. The microcontroller 1104 controls the voltage being delivered to the one or more light sources 112 by controlling the voltage regulator 1106. In that manner, the control unit 110 is configured to regulate the electrical power in order to generate a plurality of levels of illuminations from the one or more light sources 112.

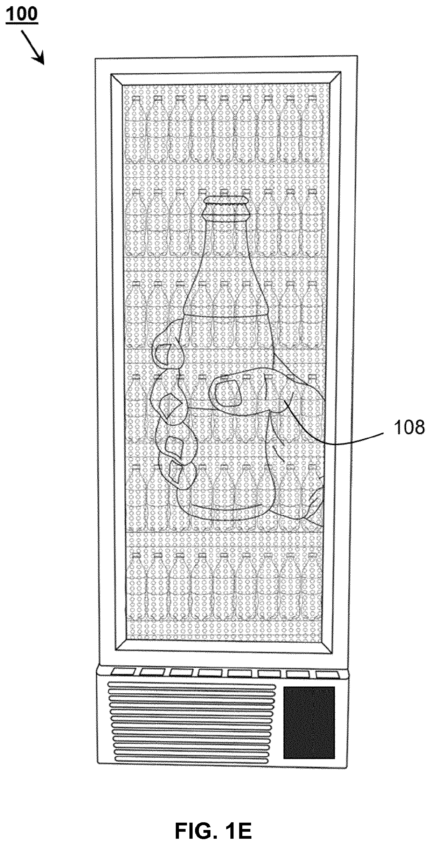

Figure 1E illustrates the cabinet 100 with an intermediate illumination of one or more light sources 112, in accordance with an embodiment of the present invention. As can be seen from Figure ID, that the ornamentation 108 is partly visible, while the items (or the bottles) inside the enclosed space too are partly visible.

Figure IF illustrates the cabinet 100 with maximum illumination of the one or more light sources 112, in accordance with an embodiment of the present invention. As can be seen from Figure IF, that the ornamentation 108 has negligible visibility, while the items (or the bottles) inside the enclosed are significantly visible. In that manner, as the illumination of the one or more light sources 112 is increased, the products and display items inside the enclosed space gradually become visible and as the illumination of the one or more light sources 112 is decreased the ornamentation of the sticker 106 becomes gradually visible.

This way an observer or a potential customer is able to view both the products and the ornamentation 108, alternatively, without having to turn their face in any other direction. It is envisaged that a plurality of respective time durations of the plurality of levels of illumination may have a plurality of predetermined respective values. For example, a control cycle configured into the control unit 110, may include dimming (t₁ s) - switched off (t₂ s) - switched on and brightening (t₃ s) - switched on at full brightness (t₄ s) - dimming (t₁ s). Values of t₁, t₂, t₃ and t₄ may vary as per specific applications

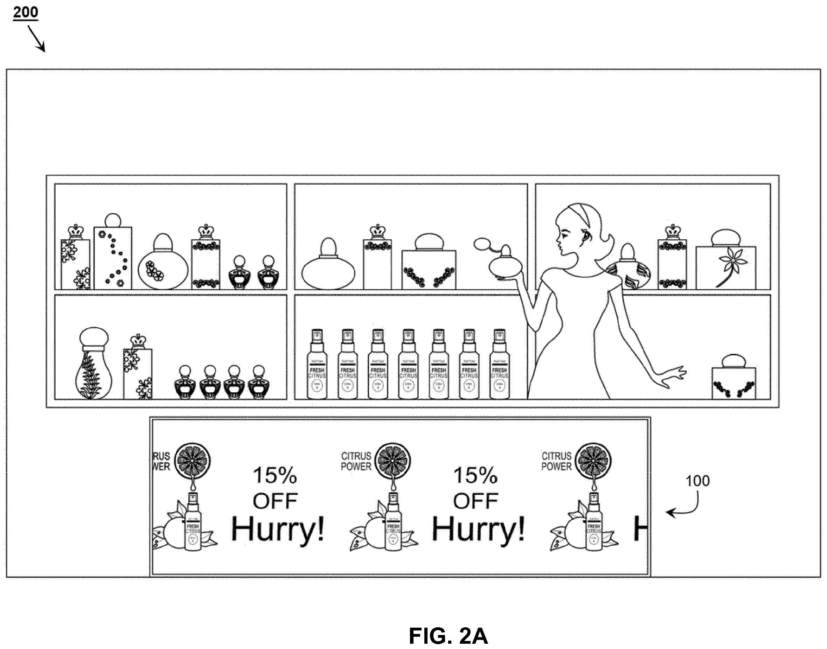

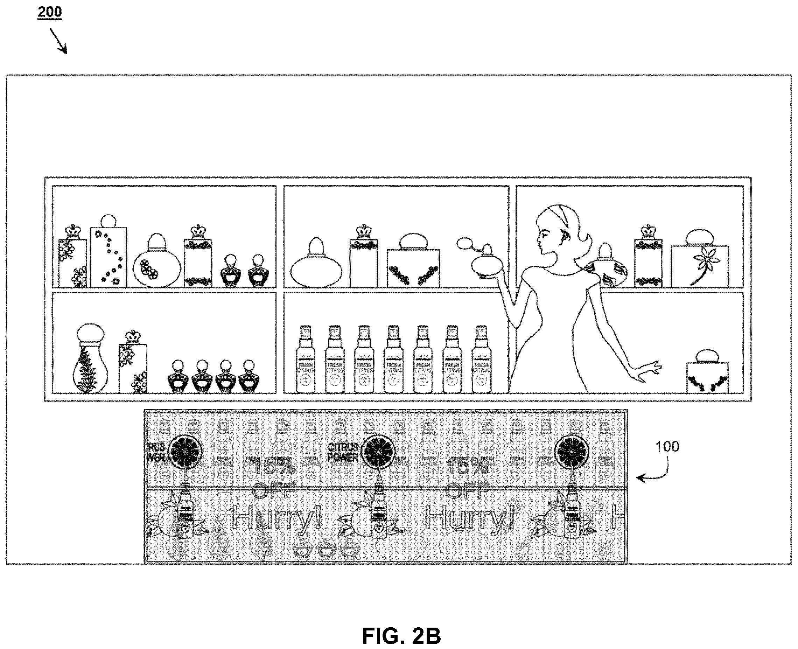

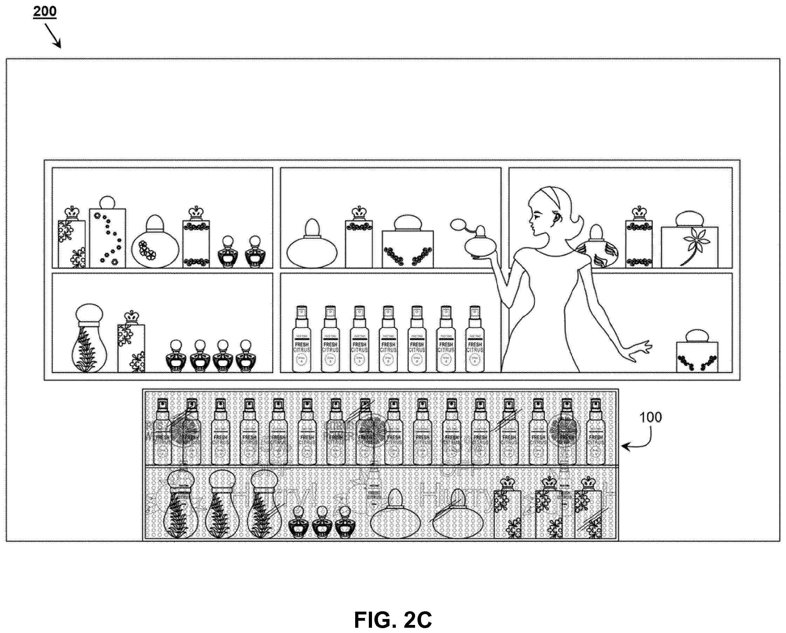

Figures 2A, 2B and 2C illustrates the product display cabinet 100 applied to a cosmetic products showroom 200, in accordance with an embodiment of the present invention. Here the ornamentation 108 includes special promotional offers (such as discounts etc.) and the items include cosmetic products.

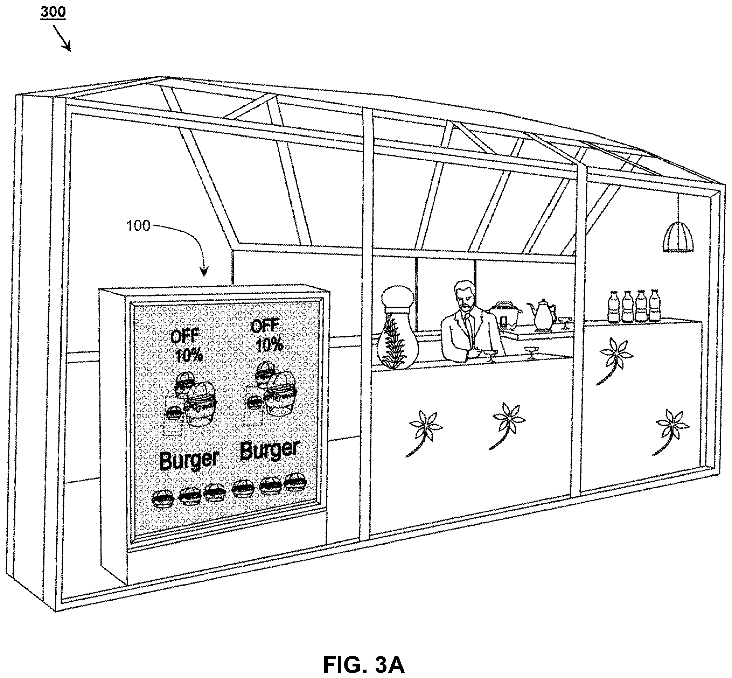

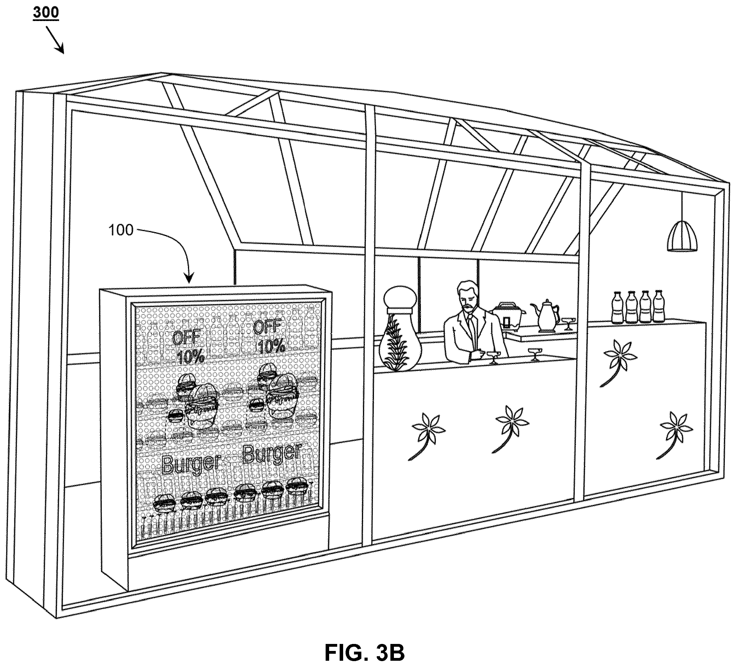

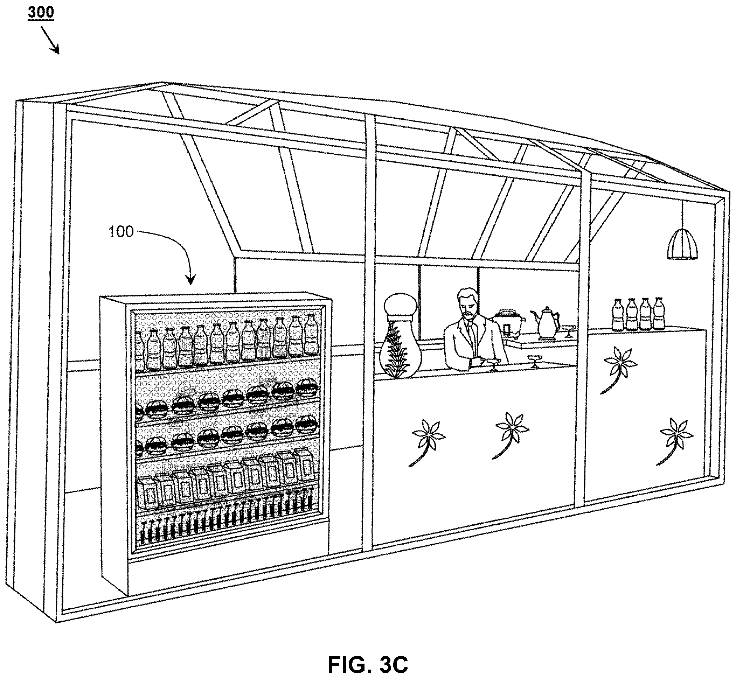

Figures 3A, 3B and 3C illustrates the product display cabinet 100 applied to a food stall 300, in accordance with an embodiment of the present invention. Here again, the ornamentation 108 includes special promotional offers (such as discounts etc.), while the items include food products. The cabinet 100 may in this case be applied to a refrigerator, an ordinary food shelf or a food shelf with heating/cooling arrangement etc.

The present invention as described above offers a number of advantages:
1. The present invention allows product display and promotion without the use of expensive equipment such as LCD/LED screen based devices, network infrastructure and without consumption of excessive amounts of electricity.
2. The present invention gives a moving sticker impression as illumination changes on predetermined intervals. Further, the illumination may change automatically on regular basis.
3. Wide range of ornamentations may be applied to the sticker.
4. The pattern of holes can be designed to be of different configurations.
5. The stickers can be of varying sizes depending upon sizes of the transparent portions.
6. This invention is retrofit-able and can be applied to the any transparent portion, whether newly manufactured or already existing.
7. The present invention to create more impulse among customers for products such as glass door coolers or other display cabinets for the purpose of different branding/images and the product placed inside for marketing of different brand and enhance the sale of the product placed inside of the cooler or the cooler.

The terms and descriptions used herein are set forth by way of illustration only and are not meant as limitations. Examples and limitations disclosed herein are intended to be not limiting in any manner, and modifications may be made without departing from the spirit of the present disclosure. Those skilled in the art will recognize that many variations are possible within the spirit and scope of the disclosure, and their equivalents, in which all terms are to be understood in their broadest possible sense unless otherwise indicated.

Various modifications to these embodiments are apparent to those skilled in the art from the description and the accompanying drawings. The principles associated with the various embodiments described herein may be applied to other embodiments. Therefore, the description is not intended to be limited to the embodiments shown along with the accompanying drawings but is to be providing broadest scope of consistent with the principles and the novel and inventive features disclosed or suggested herein. Accordingly, the invention is anticipated to hold on to all other such alternatives, modifications, and variations that fall within the scope of the present invention and appended claims.

## Claims

1. A display cabinet (100) for display of items, the display cabinet (100) comprising:
an enclosed space adapted to house the items;
one or more light sources (112) provided within the enclosed space;
a periphery (102) encapsulating the enclosed space, wherein the periphery (102) includes a transparent portion (104);
a sticker (106) attached on an outer surface of the transparent portion (104), the sticker (106) including an ornamentation (108) and a pattern of holes (107) provided within the ornamentation (108);
an electrical power source configured to deliver electrical power to the one or more light sources (112); and
a control unit (110) configured to regulate the electrical power being delivered to the one or more light sources (112).

2. The display cabinet (100) as claimed in claim 1, wherein the display cabinet (100) is a part of a refrigerator (101).

3. The display cabinet (100) as claimed in claim 1 or 2, wherein the one or more light sources (112) include Light Emitting Diodes (LEDs).

4. The display cabinet (100) as claimed in one of claims 1 to 3, wherein the transparent portion (104) is made of any one of glass and a transparent polymer material.

5. The display cabinet (100) as claimed in one of claims 1 to 4, wherein the ornamentation (108) includes one or more of colour, images, branding, logo, advertisements, product information, special offers and information in text form.

6. The display cabinet (100) as claimed in one of claims 1 to 5, wherein respective diameters of the holes in the pattern of holes (107) are in a range of 0.5 mm to 3.5 mm and minimum peripheral distance between any two holes is in a range of 0 to 3.5 mm in all directions.

7. The display cabinet (100) as claimed in one of claims 1 to 6, wherein the electrical power source is any one or more of an AC and/or DC power source.

8. The display cabinet (100) as claimed in one of claims 1 to 7, wherein the control unit (110) is configured to regulate the electrical power by regulating a voltage of the electrical power.

9. The display cabinet (100) as claimed in one of claims 1 to 8, wherein control unit (110) is configured to regulate the electrical power in order to generate a plurality of levels of illuminations from the one or more light sources (112).

10. The display cabinet (100) as claimed in claim 9, wherein a plurality of respective time durations of the plurality of levels of illumination have a plurality of predetermined respective values.
